# EUROPÄISCHE PATENTSCHRIFT

(11) **EP 1 310 175 B1**
(45) Veröffentlichungstag und Bekanntmachung des Hinweises auf die Patenterteilung: **13.10.2004**
(21) Anmeldenummer: 02024142.8
(22) Anmeldetag: 30.10.2002
(51) Int. Cl.: A23L 3/3472, C09K 15/34

(54) **Verfahren zur Isolierung von Antioxidantien**
Process for the isolation of antioxidants
Procédé d'isolation d'antioxydants

(30) Priorität: 08.11.2001 DE 10154806
(43) Veröffentlichungstag der Anmeldung: 14.05.2003
(73) Patentinhaber: Cognis Deutschland GmbH & Co. KG, 40589 Düsseldorf (DE)
(72) Erfinder: Johannisbauer, Wilhelm, Dr., 40699 Erkrath (DE); Bonakdar, Mehdi, Dr., 67730 Châtenois (FR); Richard-Elsner, Christiane, Dr., 40595 Düsseldorf (DE)

(56) Entgegenhaltungen:
- WO-A-01/45514
- US-A- 5 426 038
- US-B1- 6 197 308
- WILSON; WAGNER; SHAW: "Reduction of Bitter Components in Grapefruit and Navel Orange Juices with beta-Cyclodextrin Polymers or XAD Resins in a Fluidized Bed Process" JOURNAL OF AGRICULTURAL AND FOOD CHEMISTRY, Nr. 37, 1989, Seiten 14-17, XP002241623 USA

## Beschreibung

### Gebiet der Erfindung

Die Erfindung befindet sich auf dem Gebiet der Antioxidantien und betrifft ein neues Verfahren zur Isolierung von Antioxidantien aus den Rückständen der Olivenölherstellung.

### Stand der Technik

Freie Radikale im Körper greifen bevorzugt die mehrfach ungesättigten Fettsäuren in der Plasmamembran an. Dadurch werden biologische Schäden verursacht, die von Alterungsprozessen bis hin zu Krebs führen können. Um diese Schäden zu verhindern können sowohl Kosmetika als auch Nahrungsmitteln Antioxidantien zugesetzt werden. Natürliche Antioxidantien werden dabei bevorzugt. Vor allem Oliven und Olivenöl sind als reich an natürlichen Antioxidantien bekannt. In Oliven befinden sich verschiedene phenolische Säuren wie p-Cumarsäure, Vanillinsäure, Ferulasäure, Kaffesäure. Weitere phenolische Bestandteile sind Hydroxytyrosol, Tyrosol und Oleuropein [vgl. Feridoon, Shahidi, Natural Antioxidants, **AOCS Press, 117 (1996); JAOCS 76, 873-882** (**1999**)].Die antioxidative Aktivität einiger phenolischer Bestandteile, besonders die von Oleuropein und Hydroxytyrosol, ist größer als die von α-Tocopherol [vgl. **Phytochem. 31, 1173-1178 (1992); Food Chem. 52, 289 (1991)].** In **Experientia 51, 32-34 (1995)** wird die Wirkung eines Extraktes aus Olivenblättern als noch höher beschrieben als die der Einzelstoffe. Bei der Herstellung von Olivenöl entsteht ein Abwasserstrom, der sich aus dem Fruchtwasser und aus Waschwasser zusammensetzt. In diesem Wasser wurden die erwähnten phenolischen Stoffe mit antioxidativen Eigenschaften nachgewiesen. Die Abtrennung der phenolischen Bestandteile aus Olivenwasser oder anderen Olivenbestandteilen wie dem Stein, Blättern oder dem Olivenfleisch kann durch Extraktion mit einem Wasser/Methanolgemisch oder Ethylacetat erfolgen **[JAOCS 78**, **625-629** (**2001**)]. Polymere Adsorbentien vom Typ XAD (Rohm & Haas) adsorbieren bevorzugt unpolare organische Substanzen aus polaren Flüssigkeiten. Adsorption kann in einem Festbett und in einer Wirbelschicht (Fluidized-bed) erfolgen. Bei der Festbettadsorption wird der Feed von oben auf die mit dem Adsorbens dicht gepackte Säule gegeben. Bei Anwesenheit von Partikeln oder hochviskosen Bestandteilen im Feed besteht immer die Gefahr des Verblockens der Säule. Bei der Wirbelschicht-Adsorption wird die Adsorbensschüttung durch die von unten einströmende Flüssigkeit etwas gelockert, so dass sie nicht durch große Moleküle verblockt wird. Eine Vorbehandlung zur Abtrennung von Feststoffen oder hochviskosen Bestandteilen ist also nicht erforderlich. Die Wirbelschicht-Adsorption wird zur Proteinabtrennung in der Biotechnologie [**J.Chem.Technol.Biotechnol.**, **74**(**3**), **264-269** (**1999**)] und in der Lebensmittelindustrie z.B. zur Entbitterung von Zitrusfrüchten eingesetzt **[J.Agric.Food 37, 14-18 (1989)]**.

WO-A-0145514 offenbart eine Methode zur Gewinnung von Antioxidantien aus Olivenwasser durch Extraktion und anschließender Trennung mittels Säulenchromatographie.

US-A-6197308 offenbart eine Methode zur Isolierung von Oleuropin aus Olivenöl durch DC oder HPLC.

US-A-5426038 beschreibt eine Methode zur Produktion einer antibiotischen Substanz, bei der die Substanz durch Wirbelschichtadsorption gereinigt wird.

Bisher wird zur Abtrennung von antioxidativen Bestandteilen aus Olivenbestandteilen die Extraktion mit Lösungsmitteln eingesetzt. Um eine sinnvolle Extraktion von Olivenwasser durchführen zu können, muss dieses jedoch beispielsweise durch Eindampfen aufkonzentriert werden. Da aufgrund der hohen Verdampfungsenthalpie von Wasser hierzu große Mengen an Energie eingesetzt werden müssen, ist dieser Schritt kostenaufwändig. Da zudem viele Polyphenole temperaturempfindlich sind, kann dies auch nur bei niedrigen Temperaturen und Drücken durchgeführt werden.

Die Aufgabe der Erfindung hat somit darin bestanden, ein neues Verfahren zur Isolierung von Antioxidantien aus den Rückständen der Olivenölherstellung zur Verfügung zu stellen, welches frei von den eingangs geschilderten Nachteilen ist.

### Beschreibung der Erfindung

Gegenstand der Erfindung ist ein Verfahren zur Isolierung von Antioxidantien aus Rückständen der Olivenölherstellung, welches sich dadurch auszeichnet, dass man Olivenwasser einer Wirbelschichtadsorption an einem geeigneten Adsorbens unterwirft, die adsorbierten Antioxidantien mit einem geeigneten Lösemittel eluiert und das Eluat wieder vom Lösemittel befreit. Die Adsorption in der Wirbelschicht erwies sich insbesondere gegenüber einer Festbettadsorption von besonderem Vorteil, da sich auf diese Weise auch hochviskose Ausgangsstoffe und solche mit festen Anteilen verarbeiten lassen, die ansonsten erst einer Vorbehandlung hätten unterworfen werden müssen. Auf diese Weise kann dann auch das rohe Olivenwasser mit sämtlichen darin enthaltenen Wirkstoffen und nicht etwa ein abgereichertes Filtrat genutzt werden.

Überraschenderweise wurde gefunden, dass die Wirbelschichtadsorption ein effektives und wirtschaftliches Verfahren zur Isolierung und Konzentrierung von natürlichen Antio-xidantien aus den Rückständen der Olivenölherstellung darstellt. Die auf diese Weise gewonnenen Wirkstoffe erweisen sich gegenüber dem Standard Vitamin E als deutlich aktiver.

### Olivenwasser

Als Ausgangsstoffe für das erfindungsgemäße Verfahren kommt vorzugsweise das sogenannte Olivenwasser in Frage, bei dem es sich um Prozesswasser, welches bei der Herstellung von Olivenöl anfällt und eine nicht unbeträchtliche Fracht an gelösten Wirkstoffen aufweist. Im einzelnen kann Olivenwasser eingesetzt werden, welches einen Anteil an organischen Bestandteilen im Bereich von 1 bis 50, vorzugsweise 5 bis 30 und insbesondere 10 bis 20 Gew.-% enthält. In diesem Zusammenhang gilt es einen Kompromiss zwischen ausreichend hohem Wirkstoffgehalt und noch akzeptabel hoher Viskosität zu finden. Bei hohen Viskositäten besteht die Gefahr, dass nicht alle Wirkstoffe adsorbiert werden.

### Adsorbentien

Als Adsorbentien eignen sich grundsätzlich alle Stoffe, die in der Lage sind unpolare Stoffe aus polaren Lösungen zu adsorbieren. Vorzugsweise kommen für diesen Zweck Ionenaustauscherharze im allgemeinen und im besonderen Amberlite® XAD oder Lewatit® EP in Frage.

### Wirbelschichtadsorption

Man unterscheidet in diesem Zusammenhang zwischen Fließbett- und Wirbelbettverfahren. Im Fließbettverfahren wird durch geeignete Maßnahmen wie unterschiedlich schwere Adsorbenspartikel oder magnetisierte Partikel sichergestellt dass die Partikel schweben aber nicht verwirbeln. Im Wirbelbett können die Partikel ihre Höhe verändern. Anschließend erfolgt die Elution der adsorbierten Bestandteile durch geeignete Lösemittel, aus denen die Antioxidantien dann durch Verdampfen bei niedrigem Druck und niedriger Temperatur rein gewonnen werden. Es ist auch eine stufenweise Elution mit unterschiedlichen Lösungsmittelzusammensetzungen oder eine Gradientenelution möglich. Dadurch werden verschiedene Fraktionen an Substanzen erhalten.

Zur Adsorption der Wirkstoffe wird im Sinne des erfindungsgemäßen Verfahrens üblicherweise eine Säule zur Hälfte mit dem Adsorbens gefüllt. Das Olivenwasser wird von unten nach oben durch die Säule geführt. Der Volumenstrom wird so gewählt, dass das Bett angehoben wird aber nicht die Säule verlässt. Die Beladung des Adsorbens ist neben der Feststoffbeladung eine Größe, die die Güte einer Adsorption kennzeichnet. Die Beladung kennzeichnet, wie viel Einsatzstoff ("Feed") pro Zeiteinheit die Säule passiert. Sie wird in Bettvolumina/h angegeben. Es hat sich als besonders vorteilhaft erwiesen, das Olivenwasser mit einem Volumenstrom von 4 bis 5,5, vorzugsweise 4,5 bis 5 BV/h (BV = Bettvolumen) durchzusetzen. Im Gegensatz zu Adsorptionsverfahren des Stands der Technik, die mit Beladungen an adsorbierten Bestandteilen zwischen 30 und 100 g/l Adsorbens arbeiten, konnten im vorliegenden Fall Beladungen von bis zu 400 g/l realisiert werden; d.h., die Säule wird wesentlich besser ausgenutzt. Bei der Auswahl der optimalen Temperatur ist zu berücksichtigen, dass die Adsorptionskapazität mit der Temperatur abnimmt, bei höheren Temperaturen auch ein Teil des Wasser verdampft und es in der Folge zu einer Schädigung der temperaturempfindlichen Rohstoffe kommen kann. Ein höherer Druck fördert die Adsorption, wenngleich die Wirkstoffe nur bis zu einem bestimmten Druck chemisch stabil sind. Üblicherweise wird die Wirbelschichtadsorption bei Temperaturen im Bereich von 20 bis 90 und vorzugsweise 20 bis 25 °C sowie Drücken im Bereich von 1 bis 3 bar durchgeführt.

### Elution

Die nachfolgende Elution der Wirkstoffe kann in an sich bekannter Weise erfolgen. Als Lösemittel eignen sich beispielsweise Ethanol, Isopropylalkohol, Ethylacetat, Butylacetat, Diethylether und Aceton sowie deren gegebenenfalls wässrigen Gemische. Bevorzugtes Elutionsmittel ist indes Methanol sowie eine Mischung aus Methanol und Wasser. Üblicherweise werden das Olivenwasser und die Lösemittel im Gewichtsverhältnis 1 : 1 bis 1 : 4 eingesetzt. Auch eine stufenweise Elution mit unterschiedlichen Lösemittelzusammensetzungen oder Gradientenelution ist möglich. In diesem Fall werden dann unterschiedliche Wertstoff-Fraktionen erhalten.

### Beispiele

**Beispiel 1.** Zur Vorbehandlung wurde 75 ml Ionenaustauscher vom Typ Amberlite® XAD4 (Rohm & Haas) mit Ethanol in drei Portionen zu jeweils 100 ml gewaschen, anschließend mit zweimal 200ml destilliertem Wasser gespült, jeweils filtriert und anschließend in eine 100 ml-Ionenaustauschersäule (Normag, 30cm lang, Innendurchmesser 2 cm) gefüllt. Die Säule war unten werksseitig mit einer Fritte mit 150-250 µm Porenweite verschlossen. Oben wurde die Säule von einem Absaugstück mit Olive mit eingebauter Fritte mit 150-200 µm Porenweite abgeschlossen. Mit einer Schlauchpumpe (Verder GmbH, Typ VRX 7, Baujahr 1981) und einem Silikonschlauch von 6 mm Durchmesser wurde ein Volumenstrom von 360 ml/h Olivenwasser von unten auf die Säule gegeben. (Das Olivenwasser wurde durch die Verdünnung von eingedampftem Olivenwasserkonzentrat auf die Ausgangskonzentration hergestellt. )1000 g Olivenwasser wurden aufgegeben. Die auf dem Adsorbens zurückgehaltenen Bestandteile wurden mit 500 g Methanol eluiert. Das Methanol wurde eingedampft. Dabei fiel ein zähflüssiger Rückstand von 2 g an.

**Beispiel 2.** Die Wirksamkeit des Olivenwassers bzw. der abgetrennten Fraktionen auf antioxidative Eigenschaften (AOP) wurde mit Hilfe eines Chemilumineszenzverfahrens, der OSI-Methode (Oxidative Stability Instrument) und LDL-Oxidation (Low-Density Lipoprotein-Oxidation) untersucht. Die mit dem Chemilumineszenzverfahrens ermittelten Werte geben an, wie viel mg Vitamin E man benötigt, um 1000 mg des Olivenwasseradsorbates zu ersetzen. Werte über 1000 kennzeichnen also ein höheres antioxidatives Potential als Vitamin E. Bei der LDL-Oxidation werden freie Radikale erzeugt. Der ermittelte Wert gibt an, wie viel Olivenwasseradsorbat benötigt wird, um 50% der Radikale aufzufangen. Vitamin E hat einen LDL-Wert von 1 - 2. Bei der OSI-Methode wird Distelöl erwärmt und die Zersetzungsprodukte aufgefangen. Durch Zugabe von Antioxidantien wird dieser Prozess verlängert. Es zeigte sich, dass das nach Beispiel 1 erhaltene Produkt etwa 1,5 mal so aktiv war wie Vitamin E.

## Patentansprüche

1. Verfahren zur Isolierung von Antioxidantien aus Rückständen der Olivenölherstellung, **dadurch gekennzeichnet, dass** man Olivenwasser einer Wirbelschichtadsorption an einem geeigneten Adsorbens unterwirft, die adsorbierten Antioxidantien mit einem geeigneten Lösemittel eluiert und das Eluat wieder vom Lösemittel befreit.

2. Verfahren nach Anspruch 1, **dadurch gekennzeichnet, dass** man Olivenwasser mit einem Anteil an organischen Bestandteilen von 1 bis 50 Gew.-% einsetzt.

3. Verfahren nach den Ansprüchen 1 und/oder 2, **dadurch gekennzeichnet, dass** man Adsorbentien einsetzt, die unpolare Stoffe aus polaren Lösungen adsorbieren.

4. Verfahren nach mindestens einem der Ansprüche 1 bis 3, **dadurch gekennzeichnet, dass** man als Adsorbentien polymere Adsorbentien einsetzt.

5. Verfahren nach Anspruch 4, **dadurch gekennzeichnet, dass** man polymere Adsorbentien vom Typ Amberlite® XAD oder Lewatit® EP einsetzt.

6. Verfahren nach mindestens einem der Ansprüche 1 bis 5, **dadurch gekennzeichnet, dass** man die Wirbelschichtadsorption bei Temperaturen im Bereich von 5° bis 90 °C durchführt.

7. Verfahren nach mindestens einem der Ansprüche 1 bis 6, **dadurch gekennzeichnet, dass** man die Wirbelschichtadsorption bei Drücken im Bereich von 1 bis 3 bar durchführt.

8. Verfahren nach mindestens einem der Ansprüche 1 bis 7, **dadurch gekennzeichnet, dass** man das Olivenwasser mit einem Volumenstrom von 4 und 5,5 BV/h durchsetzt.

9. Verfahren nach mindestens einem der Ansprüche 1 bis 8, **dadurch gekennzeichnet, dass** man Lösemittel einsetzt, die'ausgewählt sind aus der Gruppe, die gebildet wird von Methanol, Ethanol, Isopropylalkohol, Ethylacetat, Butylacetat, Diethylether und Aceton sowie deren gegebenenfalls wässrigen Gemische.

10. Verfahren nach mindestens einem der Ansprüche 1 bis 9, **dadurch gekennzeichnet, dass** man das Olivenwasser und die Lösemittel im Gewichtsverhältnis 1 : 1 bis 1 : 4 einsetzt.

11. Verfahren nach mindestens einem der Ansprüche 1 bis 10, **dadurch gekennzeichnet, dass** man die Wirkstoffe stufenweise eluiert.

## Claims

1. A process for isolating antioxidants from residues from the production of olive oil, **characterized in that** olive water is subjected to fluidized bed adsorption on a suitable adsorbent, the adsorbed antioxidants are eluted with a suitable solvent and the eluate is freed from the solvent again.

2. A process as claimed in claim 1, **characterized in that** olive water containing 1 to 50% by weight organic constituents is used.

3. A process as claimed in claims 1 and/or 2, **characterized in that** adsorbents which adsorb nonpolar substances from polar solutions are used.

4. A process as claimed in at least one of claims 1 to 3, **characterized in that** polymeric adsorbents are used as the adsorbents.

5. A process as claimed in claim 4, **characterized in that** polymeric adsorbents of the Amberlite® XAD or Lewatit® EP type are used.

6. A process as claimed in at least one of claims 1 to 5, **characterized in that** the fluidized bed adsorption is carried out at temperatures of 5 to 90°C.

7. A process as claimed in at least one of claims 1 to 6, **characterized in that** the fluidized bed adsorption is carried out under pressures of 1 to 3 bar.

8. A process as claimed in at least one of claims 1 to 7, **characterized in that** the olive water is passed through at a volumetric flow rate of 4 to 5,5 BV/h.

9. A process as claimed in at least one of claims 1 to 8, **characterized in that** solvents selected from the group consisting of methanol, ethanol, isopropyl alcohol, ethyl acetate, butyl acetate, diethylether and acetone and optionally water-containing mixtures thereof are used.

10. A process as claimed in at least one of claims 1 to 9, **characterized in that** the olive water and the solvents are used in a ratio by weight of 1:1 to 1:4.

11. A process as claimed in at least one of claims 1 to 10, **characterized in that** the active substances are eluted in stages.

## Revendications

1. Procédé d'isolement d'antioxydants provenant de résidus de la fabrication de l'huile d'olive,
**caractérisé en ce qu'**
on soumet de l'eau de pressage d'olives à une adsorption en lit fluidisé sur un adsorbant approprié, on élue les antioxydants absorbés avec un solvant approprié, et on élimine à nouveau l'éluat du solvant.

2. Procédé selon la revendication 1,
**caractérisé en ce qu'**
on utilise de l'eau de pressage d'olives comportant une proportion de constituants organiques de 1 à 50 % en poids.

3. Procédé selon les revendications 1 et/ou 2,
**caractérisé en ce qu'**
on utilise des adsorbants qui adsorbent les matières non polaires des solvants polaires.

4. Procédé selon au moins une des revendications 1 à 3,
**caractérisé en ce qu'**
on utilise comme adsorbants des adsorbants polymères.

5. Procédé selon la revendication 4,
**caractérisé en ce qu'**
on utilise des adsorbants polymères du type Amberlite ® XAD ou Lewatit ®EP.

6. Procédé selon au moins une des revendications 1 à 5,
**caractérisé en ce qu'**
on effectue l'adsorption en lit fluidisé à des températures allant de 5° à 90°C.

7. Procédé selon au moins une des revendications 1 à 6,
**caractérisé en ce qu'**
on effectue l'adsorption en lit fluidisé à des pressions allant de 1 à 3 bars.

8. Procédé selon au moins une des revendications 1 à 7,
**caractérisé en ce qu'**
on fait passer de l'eau de pressage d'olives à un débit volumique de 4 et 5,5 BV/h.

9. Procédé selon au moins une des revendications 1 à 8,
**caractérisé en ce qu'**
on utilise des solvants choisis dans le groupe formé par le méthanol, l'éthanol, l'alcool isopropylique, l'acétate d'éthyle, l'acétate de butyle, l'éther diéthylique et l'acétone, ainsi que le cas échéant leurs mélanges aqueux.

10. Procédé selon au moins une des revendications 1 à 9,
**caractérisé en ce qu'**
on utilise l'eau de pressage d'olives et les solvants dans un rapport pondéral de 1 : 1 à 1 : 4.

11. Procédé selon au moins une des revendications 1 à 10,
**caractérisé en ce qu'**
on élue les substances actives par étapes.
